(19) Europäisches Patentamt / European Patent Office / Office européen des brevets

(11) **EP 1 719 676 B1**

(12) **EUROPEAN PATENT SPECIFICATION**

(45) Date of publication and mention
of the grant of the patent:
**12.08.2015 Bulletin 2015/33**

(51) Int Cl.:
***B60T 8/172*** *(2006.01)*

(21) Application number: **06113632.1**

(22) Date of filing: **08.05.2006**

(54) **System and method for tire/road friction estimation**

Verfahren und Vorrichtung zur Reibwertschätzung zwischen Fahrbahn und Reifen

Procédé et dispositif pour l'estimation du coefficient de friction route/pneu

(84) Designated Contracting States:
**DE**

(30) Priority: **06.05.2005 US 678708 P**
**05.05.2006 US 419000**

(43) Date of publication of application:
**08.11.2006 Bulletin 2006/45**

(73) Proprietor: **Haldex Brake Products Aktiebolag**
**261 24 Landskrona (SE)**

(72) Inventors:
• **Svendenius, Jacob**
**22 240 Lund (SE)**
• **Gafvert, Magnus**
**22353 Lund (SE)**

(74) Representative: **Grundmann, Dirk et al**
**Rieder & Partner**
**Patentanwälte - Rechtsanwalt**
**Corneliusstrasse 45**
**42329 Wuppertal (DE)**

(56) References cited:
**EP-A- 0 891 904       US-A- 5 513 907**
**US-A1- 2002 059 824   US-B1- 6 549 842**

**Description**

Related Applications

This patent application claims the benefit of, under Title 35, United States Code, Section 119(e), U.S. Provisional Patent Application No. 60/678,708, filed May 6, 2005.

Field Of The Invention

The present invention relates to a system and method for estimating the friction between a tire and a road. More specifically, the invention relates to a system for efficiently updating the values of parameters relevant to the relation between the tire force and slip.

Background Of The Invention

It is well known that, when developing a force between a tire and a road, the tires are exposed to a slip. When dealing with vehicle dynamics and the control of tire forces, it is commonly assumed that the force developed between the tire and the road can be expressed by a nonlinear function dependent on this slip and a set of parameters relating to actual conditions of the tire and the road.

The force generated at a particular slip depends on many factors, such as tire pressure, temperature, tire load, and the tire/road coefficient of friction, and many models exist that try to explain this behavior. This relationship may be written as:

$$F_{road,x} = f_x(F_{load}, slip, \alpha, Params) \qquad (1)$$

$$F_{road,y} = f_y(F_{load}, slip, \alpha, Params) \qquad (2)$$

where $F_{load}$ is the vertical force acting on the tire, $slip$ is the tire slip, $\alpha$ is the slip angle, and $Params$ are road and tire dependent parameters. Though such parameters are sometimes referenced separately as "road dependent" and "tire dependent" based on the relative importance of the road or tire on the particular parameter, in reality, all such parameters are dependent on the road and the tire in different proportions. The tire slip ($slip$) and the slip angle ($\alpha$) may be defined as follows:

$$slip = slip_x = (v_x - R_e\omega_{wheel})/v_x \quad ; \quad tan(\alpha) = slip_y = v_y/v_x \qquad (3)$$

where $v_x$ and $v_y$ are linear velocity in the longitudinal ($v_x$) and lateral ($v_y$) directions, $R_e$ is the rolling radius, defined as $v_x/\omega_{wheel}$ for a free rolling tire that does not transmit substantially any tire forces, and $\omega_{wheel}$ is the wheel rotational velocity.

For many systems in the vehicle, information about the value of the coefficient of friction between the tire and the road is valuable. Additionally, for control and stabilization purposes, though it is valuable to have a comprehensive knowledge of the relation between the slip and the tire force, it is particularly valuable to know at which slip the friction is best utilized. This $slip°$ is defined as the optimal tire slip value, such that the resulting tire/road frictional force ($F_{road}$) achieves its optimum value at this slip. This optimal tire slip can be expressed as:

$$slip° = g_x(F_{load}, \alpha, Params) \qquad (4)$$

Accordingly, the resulting optimal tire/road frictional force ($F°_{road}$) can therefore be expressed as:

$$F°_{road} = [f_x^2(F_{load}, slip°, \alpha, Params) + f_y^2(F_{load}, slip°, \alpha, Params)]^{1/2} \qquad (5)$$

The nature of the tire and its interaction with the road is very complex, and a complete characterization of a tire, enabling a prediction of its behavior during any circumstances, is extremely demanding. Additionally, some particular circumstances that affect different parameters can be difficult to measure. Therefore, a perfect parameterization of the tire's behavior as it interacts with the road is very difficult.

Accordingly, as noted above, various mathematical models are employed for explaining the behavior of the tire. The road and tire dependent parameters (*Params*), which may be designated as *Road* or *Tire* depending on the relative importance thereof, may vary depending upon which tire model is being employed to describe the relationship between longitudinal and lateral tire forces as functions of the slips. For example, one simple but sufficiently accurate model is known to those skilled in the art as the "brush model", which is explained in detail in the reference entitled "Tire Models For Use In Braking Applications" authored by Jacob Svendenius (Technical Report Licentiate thesis ISRN LUTFD2/TFRT--3232--SE, Lund Institute of Technology, November 2003). In this model, the force-slip relationship is expressed using only three unknown parameters. The more tire-dependent parameters in this case are the tire stiffness (i.e. elasticity) in the longitudinal ($C_{Tire,x}$) and lateral ($C_{Tire,y}$) directions, and the more road-dependent parameter in this case is the tire/road friction coefficient $\mu_{road}$. This tire model is advantageous in the respect that only a small number of parameters (three) are required.

A method and a system according to the preamble of independent claims 1 and 17 are known from US 6 549 842 B1. Further relevant prior art documents using a tire or wheel model for estimating friction conditions are US 2002 059 824 A1, EP 0 891 904 A2, US 5 513 907 A.

The present invention is directed to a system for estimating the parameters in such a slip-force relationship at actual conditions. A problem that exists with respect to estimating these parameters, however, is that the parameters can change quickly, and the importance of each particular parameter changes as the amount of slip changes. Additionally, the relative importance of the parameters will also depend on the actual set of parameters. For these reasons, when the system detects a change in parameters, it is important not to rely on old data for performing estimations.

What is desired, therefore, is a system for estimating road friction that estimates the parameters at actual conditions. What is further desired is a system for estimating road friction that is not impractically complex. What is also desired is a system for estimating road friction that does not rely on old data as the parameters in the slip-force relationship change.

Summary Of The Invention

Accordingly, it is an object of the present invention to provide a system for estimating road friction that employs a model to accurately characterize the behavior of the tire.

It is a further object of the present invention to provide a system for estimating road friction that accounts for changes in the importance of particular parameters as the slip changes.

It is yet another object of the present invention to provide a system for estimating road friction that accounts for changes in the relative importance of the parameters.

In order to overcome the deficiencies of the prior art and to achieve at least some of the objects and advantages listed, the invention comprises a method according to claim 1.

In another embodiment, the invention comprises a system according to claim 17.

In some embodiments, assessing the importance of each of the parameters is at least partly based on the value of the actual tire slip, which may include, for each parameter, determining the actual tire slip falls within the slip range for that parameter. In certain embodiments, this assessment is also at least partly based on the particular set of parameters in the model.

In some embodiments, the value of each of the parameters is estimated using the actual tire force and the actual tire slip, and the system determines which individual parameter estimation or combination of parameter estimations is most reliable, which may be based on previous estimations of the parameters.

In some embodiments, updating a parameter includes determining whether an excitation of the tire force should be induced in order to reliably update the parameter and, if so, altering the tire force and/or the traction distribution between the wheels. In some embodiments, this includes outputting a signal that induces a controlled variation of brake force and/or engine torque.

Brief Description Of The Drawings

Figure 1 is a block diagram of a system for estimating road friction in accordance with the invention.

Figure 2 is a block diagram illustrating detail of one embodiment of a system for controlling the application of multiple brakes of a vehicle using the estimation system of Figure 1.

Figure 3 is a schematic view illustrating in more detail operation of the system of Figure 2.

Figure 4 is a graph plotting tire force as a function of slip using the Brush Model.

Detailed Description Of The Drawings

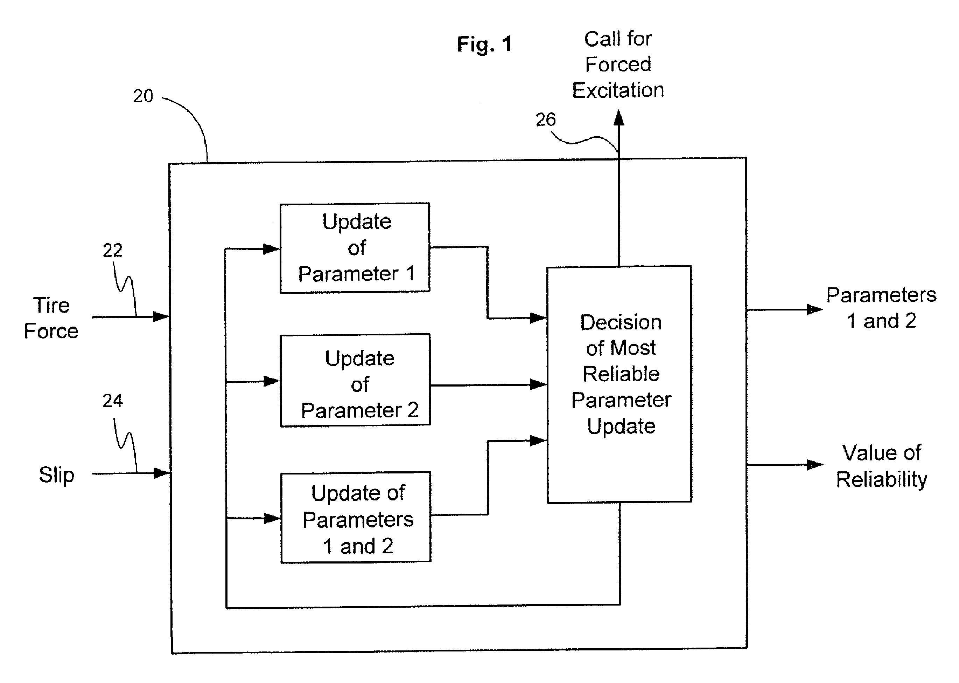

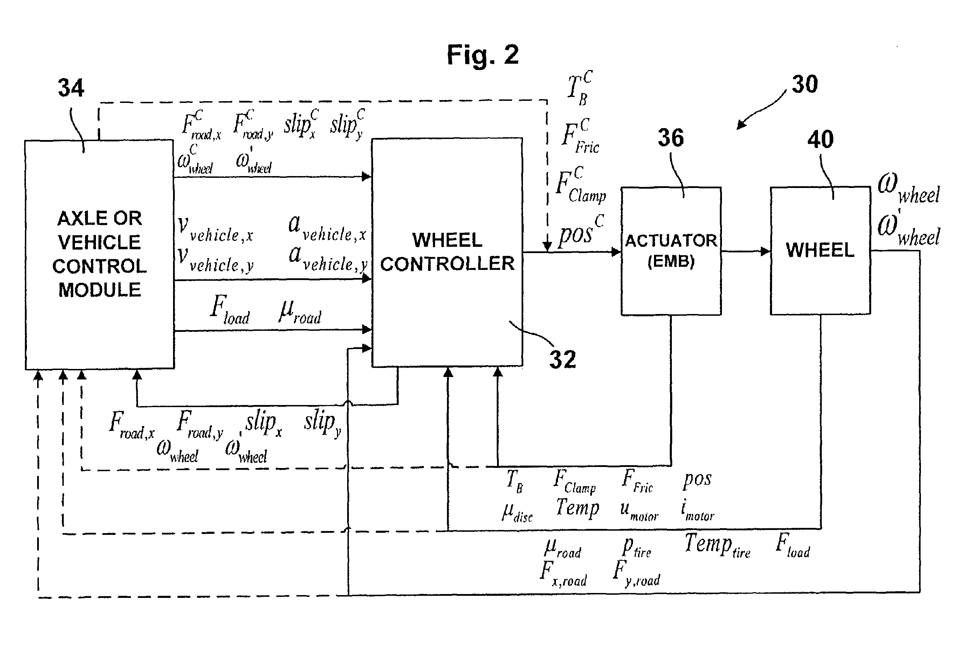

The basic components of one embodiment of a system for friction estimation in a vehicle in accordance with the invention are illustrated in Figures 1-3. Generally, a main goal of the estimation system described herein is to obtain the data necessary to permit the vehicle to regulate the wheel rotational velocity of each wheel such that a commanded or optimal slip is obtained, which corresponds to a commanded or maximum tire/road friction force. This objective is important, and the present invention achieves this, both for braking and for acceleration of the vehicle. This is typically achieved by controlling the application of an electronically controlled brake. A basic system 30 for this is illustrated schematically in Figure 2, which employs a wheel brake controller 32 for regulating the wheel rotational velocity of the wheels. Such control systems are described in further detail in U.S. Patent Application Nos. 2005-0168066, 2005-0161295, 2005-0067233.

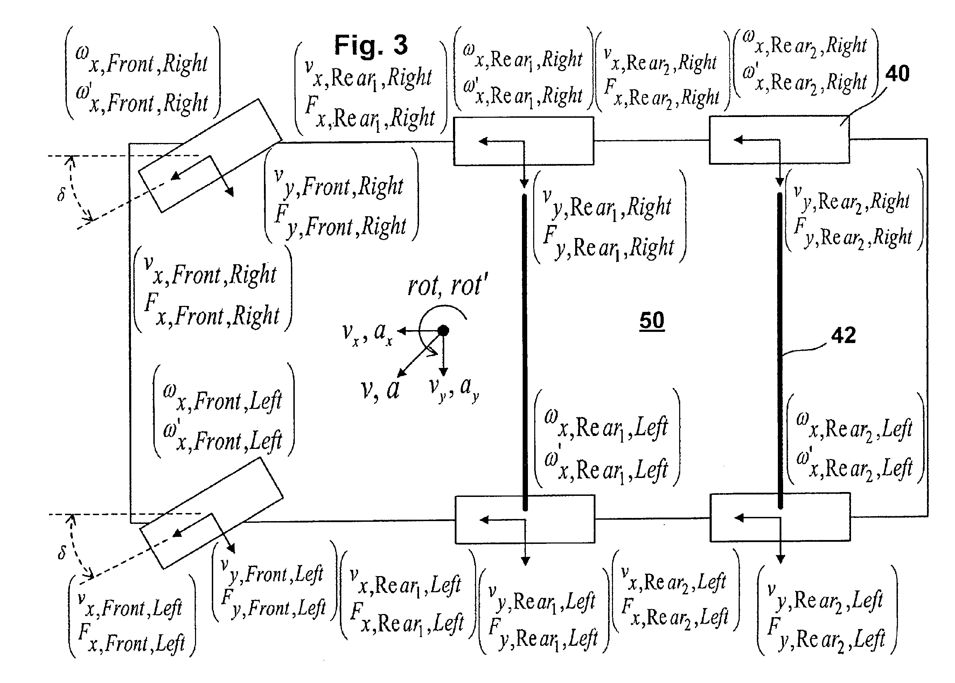

In the example shown in Figure 2, the system 30 includes a superior vehicle control unit 34, such as, for example, an axle or vehicle control module, a wheel controller 32, an EMB brake actuator 36, and a wheel 40. Referring to Figure 3, this system is used in a vehicle 50 having a plurality of wheels 40 connected to axels 42.

At each wheel 40, the wheel rotational velocity $\omega_{wheel}$ and optionally also the wheel rotational acceleration/retardation $\omega'_{wheel}$, are measured and signals are generated based thereon. The vehicle speed (v) in the longitudinal ($v_x$) and lateral ($v_y$) directions of the vehicle 50 are estimated by using the wheel rotational velocity $\omega_{wheel}$ signals from a number of wheels 40. Additionally, vehicle acceleration ($\alpha$) in the longitudinal ($\alpha_x$) and lateral ($\alpha_y$) directions and/or the rate (rot) and/or acceleration (rot') of vehicle rotation may be used for this purpose. Also, sensor signals for tire/road frictional forces in the longitudinal $F_{road,x}$ and lateral $F_{road,y}$ directions of the tire 40 may be used for this purpose. A sensor signal for steering angle $\delta$ may also be used. Another option is to directly measure the vehicle speeds (v, $v_x$, $v_y$), although this may be more cumbersome. The vehicle speed estimation functionality may either be performed in the wheel controller unit 32 or in a superior vehicle control unit 34.

The linear velocity in the longitudinal and lateral directions of each individual wheel 40 are estimated by using the estimated or measured vehicle speeds (v, $v_x$, $v_y$) described above. Such wheel linear velocities are shown in Figure 3 for each wheel 40 with reference labels appropriate for each wheel 40. For example, for the second rear right tire, the longitudinal linear wheel velocity is referenced by the designation $v_{x,Rear2, Right}$, while the lateral linear wheel velocity thereof is referenced by the designation $v_{y,Rear2, Right}$. A sensor signal for steering angle $\delta$ may also be used. Additionally, a sensor signal for rate of vehicle rotation (rot) in combination with dimensions of the vehicle 50 may be used. The linear velocity in longitudinal and lateral direction of each individual wheel 40 may either be done in the wheel controller unit 32 or the superior vehicle control unit 34.

The tire/road wheel slip in the longitudinal $slip_x$ and lateral $slip_y$ directions of each individual wheel 40 of the vehicle 50 are calculated by using the sensor signals for rotational velocity $\omega_{wheel}$ and the estimated linear velocity in the longitudinal ($v_x$) and lateral ($v_y$) direction of each individual wheel 40. The tire/road wheel slip ($slip_x$, $slip_y$) could also be measured directly. The tire/road wheel slip estimation functionality may either be done in the wheel controller unit 32 or the superior vehicle control unit 34.

As previously explained, the static and dynamic properties of the tire/road interactions are typically summarized by a mathematical model representing the relationship between tire force and slip. The parameters of the tire/road model may be estimated online based on sensor signals, and this estimation may be performed either in the wheel controller unit 32 or the superior vehicle control unit 34. As a result, many different aspects of properties of the tire and its interactions with the road can be estimated using this slip-force relation, as discussed below.

For example, the estimated tire/road wheel slip ($slip_x$, $slip_y$) together with a signal indicative of the brake torque $T_B$ of that wheel, provided by the EMB brake actuator 36, together with load force $F_{load}$ estimates of that wheel, may be used for this parameter estimation. Also, the traction torque signal provided by the engine model, as well as the brake torque from the EMB, may be employed. Also, sensor signals indicative of tire pressure $P_{tire}$, tire temperature $T_{tire}$, tire/road friction coefficient $\mu_{road}$, and/or tire/road friction force $F_{Fric}$, may by used for this parameter estimation.

The tire/road friction coefficient $\mu_{road}$ at each individual wheel 40 may be estimated by using the estimated slip ($slip_x$, $slip_y$) described above together with a signal indicative of the brake torque of that wheel $T_B$, provided by the EMB brake actuator 36, together with estimates of the load force $F_{load}$ at that wheel, together with the dimensions of the wheel 40 itself. Also, the traction torque signal provided by the engine model, as well as the brake torque from the EMB, may be employed. The wheel rotational velocity $\omega_{wheel}$ and/or acceleration/retardation $\omega'_{wheel}$ may also be used. The tire/road friction coefficient $\mu_{road}$ could also be measured directly. An alternative is to estimate a tire/road frictional coefficient

$\mu_{road}$ indicative of the entire vehicle 50. Then the sensor signal for vehicle longitudinal ($\alpha_x$) and lateral ($\alpha_y$) acceleration and for acceleration of vehicle rotation (*rot'*) may be used together with the wheel slips (*slip$_x$, slip$_y$*) of each individual wheel 40 and the dimensions of the vehicle 50. A signal indicative of the brake torque $T_B$ of each individual wheel 50, provided by the EMB brake actuator 36, may also be useful.

The tire/road friction force in the longitudinal $F_{road,x}$ and lateral $F_{road,y}$ directions of each wheel 40 are estimated by the use of the tire/road model together with the wheel slips (*slip$_x$, slip$_y$*) and load force $F_{load}$ and the estimated tire/road friction coefficient, $\mu_{road}$ of each individual wheel 40. An alternative is to estimate the tire/road friction force in the longitudinal $F_{road,x}$ and lateral $F_{road,y}$ directions of an individual wheel 40 by using a signal indicative of the brake torque $T_B$, provided by the EMB brake actuator 36, together with the sensor signal for wheel rotational acceleration/retardation $\omega'_{wheel}$. Also, the traction torque signal provided by the engine model, as well as the brake torque from the EMB, may be employed. The dimensions (i.e., the radius) of the wheel 40 itself may also be used in determining the tire/road friction force.

The various sensor signals may either be primarily provided directly to the wheel control unit 32 or, as indicated in Figure 2 by dashed lines, directly to the superior vehicle control unit 34, or directly to both of them. The various sensor signals could then be passed over to other wheel control unit(s) 32 or other superior vehicle control unit(s) 34 (such as, for example, if a superior vehicle control unit 34 is used on each vehicle axle 42, using a communication network. Through this communication network, the other wheel control unit(s) 32 and the superior vehicle control module(s) 34 can share information generated in the individual wheel control units 32).

As noted, the purpose of the wheel controller 32 is to control the braking of an individual wheel 40. There are a number of control strategies that may be employed for this. An advantageous method is to regulate the wheel rotational velocity $\omega_{wheel}$. The ideal goal of the wheel brake controller 32 is then to regulate the wheel rotational velocity $\omega_{wheel}$ such that the commanded or optimal wheel slip (*slip$^C_x$, slip$^C_y$*) is obtained. It should be noted that the commanded wheel slip (*slip$^C_x$*) corresponds to the optimal slip (*slip$^o$*) described in Equation 4. The slip (*slip$^C_x$, slip$^C_y$*) corresponds then to a commanded or maximum tire/road friction force ($F^C_{road,x}$, $F^C_{road,y}$). Another alternative is to regulate braking based upon on measured wheel slip *(slip$_x$, slip$_y$)* directly. The slip (*slip$^C_x$, slip$^C_y$*) could then be controlled in such a way that corresponding commanded or maximum tire/road frictional forces ($F^C_{road,x}$, $F^C_{road,y}$) are obtained. Yet another alternative is to control braking based on measured tire/road frictional force ($F_{road,x}$, $F_{road,y}$) directly. The tire/road frictional force ($F^C_{road,x}$, $F^C_{road,y}$) is then controlled in such a way that commanded or maximum tire/road frictional forces ($F^C_{road,x}$, $F^C_{road,y}$) are obtained. In all cases described above, the commanded wheel rotational speed/slip/tire-road-force may be provided from the superior vehicle control module 34.

Additionally, it should be noted that other wheel control schemes are possible. The objectives of the wheel control could be limited to regulate the wheel slip (*slip$_x$, slip$_y$*) to a value provided by a superior vehicle control unit 34. Yet another alternative is to limit the objectives to wheel rotational velocity $\omega_{wheel}$ control. The wheel rotational velocity $\omega_{wheel}$ is then controlled to a commanded wheel rotational velocity $\omega^C_{wheel}$ control signal, provided by a superior vehicle control unit 34. Control can similarly be achieved based upon a commanded wheel rotational acceleration $\omega'^C_{wheel}$. In other circumstances, the EMB brake actuator 36 may be controlled without direct use of feedback. It should be understood the wheel brake control could comprise the functionality known as ABS in known systems.

Returning to Figure 1, a control unit 20, which may, for example, be located in the wheel control unit 32 or superior vehicle control unit 34, receives signals 22, 24 representing the tire force and tire slip at actual conditions. The signals 22, 24 may represent a direct measurement, or may reflect the value(s) of other parameters from which the tire force and slip are calculated. The control unit 20 determines the value of the actual tire force and actual slip, which it uses with the mathematical model to estimate the parameters.

Generally, at least two parameters are required to attain sufficient accuracy in accordance with the present invention. As explained above, for many systems in the vehicle, information about the coefficient of friction between the tire and the road is very valuable. Accordingly, one particularly useful model is the tire brush model, which represents a relationship between the tire force and the tire slip that relies only on tire stiffness (i.e. elasticity) in the longitudinal ($C_{Tire,x}$) and lateral ($C_{Tire,y}$) directions, and the tire/road friction coefficient $\mu_{road}$.

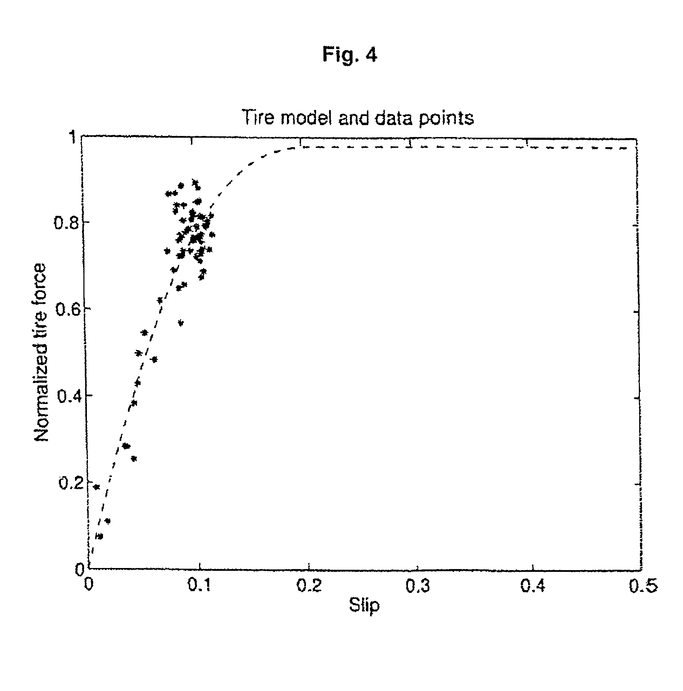

The importance of each of the parameters changes throughout the slip range. In some regions, only one parameter has a significant effect on the slip-force relationship, while in other regions, multiple parameters are important. An example employing the brush model is shown in Figure 4, which is a plot of the normalized tire force versus tire slip. The tire stiffness is important at small slips, while the coefficient of friction is significant at high slips. In between, both parameters are important.

Generally, if the actions of the operator result in sufficient excitation of the system, more than one parameter can be estimated. When multiple parameters are updated simultaneously, a set of data points is required. For example, in the brush model shown in Figure 4, while the tire force is increased during the brake application phase, there is sufficient information available for the estimation of both parameters. However, trying to estimate both parameters using all plotted dots would provide an unreliable result since the characteristics of signal noise when the brake force is settled will dominate due to the large amount of data points. Therefore, the control unit 20 must decide when it is appropriate to only perform single parameter updates.

Because parameters can sometimes change rapidly, it is important not to rely on old data when the estimation device detects a change of parameters. Therefore, it is often useful to have a certain amount of excitation of the system so that reliable data points are available in a sufficiently large area of the force-slip domain. The size of the area depends on the signal noise and how many parameters (and which particular parameters) have to be estimated. Accordingly, the driver or stabilization system changes the tire force a certain amount, forcing an excitation of the tire force via controlled variation of brake force and/or engine torque. While, as further described below, forced excitation in response to a request for such from the system may be advantageously employed, the natural excitation resulting from the actions of the operator is typically used for the estimation.

Examining the tire force and slip values, the control unit 20 decides which of the parameters can be reliably updated. The update of a parameter is based on a recursive algorithm, such as recursive least squares, Kalman filtering, or the MIT rule, which minimizes the error between the model and the measurements. The control unit 20 then also decides whether a forced excitation is necessary in order to obtain a more reliable update. The decision algorithm of the control unit 20 repeatedly makes these decisions, enabling it to determine when to switch from multiple-parameter to single-parameter updates. If a change of a parameter is detected, the control unit may request a forced excitation, as described above, to check whether another parameter has changed. It should also be noted, however, that while the use of such forced excitation may be advantageous, the system need only rely on the natural excitation from the actions of the operator in order to operate effectively.

**Claims**

1. A method of updating estimated parameters relevant to the relationship between tire force and tire slip for use in estimating the friction between the tire of a vehicle (50) and a road, the method comprising:

   providing a control unit (20);
   using a model, in conjunction with the control unit (20), based on a plurality of estimated parameters that are dependent on one or both of the tire and the road to establish a relationship between tire force and tire slip;
   determining, with the control unit (20), an actual tire force and an actual tire slip;
   said method **characterized by** the steps of:

      assessing, with the control unit (20), the importance of each of the parameters at the actual tire force and slip;
      determining, with the control unit (20), which of the parameters to update based on the assessed importance of each of the parameters; and
      updating the value of each parameter that it is determined should be updated.

2. The method of claim 1, wherein the step of updating comprises updating more than one of the parameters when there is sufficient excitation of the tire force to estimate more than one parameter.

3. The method of claim 1, wherein the step of assessing the importance of each of the parameters is at least partly based on the value of the actual tire slip.

4. The method of claim 3, further comprising the step of determining a slip range for each parameter, wherein the step of assessing the importance of each of the parameters comprises determining, for each parameter, whether the actual tire slip falls within the slip range for that parameter.

5. The method of claim 3, wherein the step of determining which of the parameters to update is at least partly based on the particular set of parameters in the model.

6. The method of claim 3, wherein the steps of assessing the importance of each parameter and determining which of the parameters to update comprise:

   estimating the value of each of the parameters using the actual tire force and the actual tire slip; and
   determining which individual parameter estimation or combination of parameter estimations is most reliable.

7. The method of claim 6, wherein the determination of the reliability of individual and combination parameter estimations is based on previous estimations of the parameters.

**8.** The method of claim 1, wherein the step of updating the value of each parameter that it is determined should be updated comprises:

determining whether an excitation of the tire force should be requested to update the parameter; and
altering the tire force in response to a determination that an excitation of the system should be induced.

**9.** The method of claim 8, wherein the step of determining whether an excitation of the tire force should be requested to update the parameters is based on the detection of a change in at least one other parameter.

**10.** The method of claim 8, wherein the step of altering the tire force comprises executing a controlled variation of at least one of a brake force and an engine torque.

**11.** The method of claim 1, wherein the step of determining the actual tire force and actual tire slip includes receiving a signal (22,24) representing the value of at least one parameter from which at least one of the actual tire force and the actual tire slip is calculated.

**12.** The method of claim 1, wherein one of the parameters is the coefficient of friction.

**13.** The method of claim 12, further comprising using the estimated parameters to calculate an optimal slip.

**14.** The method of claim 1, wherein the model is the brush tire model.

**15.** The method of claim 1, wherein the step of assessing the importance of each of the parameters is based on a recursive algorithm.

**16.** The method of claim 15, wherein the recursive algorithm comprises Recursive Least Squares, Kalman filtering, or the MIT rule.

**17.** A system for updating estimated parameters relevant to the relationship between tire force and tire slip for use in estimating the friction between the tire of a vehicle (50) and a road, comprising:

a control unit (20) operative to establish a relationship between tire force and tire slip using a model based on a plurality of estimated parameters that are dependent on one or both of the tire and the road; and
at least one input by which said control unit (20) receives at least one signal (22,24) representing an actual tire force and an actual tire slip;
**characterized in that** said control unit (20) is operative to assess the importance of each of the parameters at the actual tire force and slip, to determine which of the parameters to update based on the assessed importance of each of the parameters, and to update the value of each parameter that it is determined should be updated.

**18.** The system of claim 17, wherein said control unit (20) updates more than one of the parameters when there is sufficient excitation of the tire force to estimate more than one parameter.

**19.** The system of claim 17, wherein said control unit (20) assesses the importance of each of the parameters using the value of the actual tire slip.

**20.** The system of claim 19, wherein said control unit (20) is operative to determine a slip range for each parameter, wherein the control unit (20) assesses the importance of each of the parameters by determining, for each of the parameters, whether the actual tire slip falls within the slip range for that parameter.

**21.** The system of claim 19, wherein said control unit (20) determines which of the parameters to update at least partially based on the other parameters in said model.

**22.** The system of claim 19, wherein said control unit (20) estimates the value of each of the parameters using the actual tire force and slip, and determines which individual parameter estimation or combination of parameter estimations is most reliable.

**23.** The system of claim 22, wherein the determination of the reliability of individual and combination parameter estimations is based on previous estimations of the parameters.

24. The system of claim 17, wherein said control unit (20) is operative to determine whether an excitation of the tire force should be requested to update a parameter, further comprising an output for communicating an excitation signal to alter the tire force.

25. The system of claim 24, wherein the control unit (20) determines whether an excitation of the tire force should be requested to update the parameter based on the detection of a change in at least one other parameter.

26. The system of claim 24, wherein the excitation signal controls a variation of at least one of a brake force and an engine torque.

27. The system of claims 17, further comprising at least one sensor that measures at least one parameter from which at least one of the actual tire force and tire slip are calculated and communicates said signal to said control unit (20).

28. The system of claim 17, wherein said at least one sensor comprises a sensor that directly measures the tire slip.

29. The system of claim 17, wherein one of said parameters is the coefficient of friction.

30. The system of claim 29, wherein said control unit (20) is operative to use the parameters to calculate an optimal slip.

31. The system of claim 17, wherein said model is the tire brush model.

32. The system of claim 17, wherein said control includes a recursive algorithm for assessing the parameters.

33. The system of claim 32, wherein said recursive algorithm comprises Recursive Least Squares, Kalman filtering, or the MIT rule.

**Patentansprüche**

1. Verfahren zum Aktualisieren von abgeschätzten Parametern, die relevant sind für die Beziehung zwischen Reifenkraft und Reifenschlupf, zur Verwendung bei der Abschätzung der Reibung zwischen dem Reifen eines Fahrzeuges (50) und einer Straße, wobei das Verfahren umfasst:

   Bereitstellen einer Steuereinheit (20);
   Verwendung eines Modells in Verbindung mit der Steuereinheit, basierend auf einer Mehrzahl von abgeschätzten Parametern, die abhängig sind von dem Reifen und/oder von der Straße, um eine Beziehung zwischen Reifenkraft und Reifenschlupf herzustellen;
   Bestimmung mit der Steuereinheit (20) einer gegenwärtigen Reifenkraft und eines gegenwärtigen Reifenschlupfes;
   wobei das Verfahren **gekennzeichnet ist durch** die Schritte:

   Bewerten mit der Steuereinheit (20) der Bedeutung von jedem der Parameter bei der gegenwärtigen Reifenkraft und Schlupf;
   Bestimmung mit der Steuereinheit (20), welcher oder
   welche der Parameter zu aktualisieren ist oder sind basierend auf der bewerteten Bedeutung von jedem der Parameter; und
   Aktualisieren des Wertes von jedem Parameter, von dem bestimmt wurde, dass er aktualisiert werden soll.

2. Verfahren gemäß Anspruch 1, wobei der Schritt des Aktualisierens das Aktualisieren von mehr als einem der Parameter umfasst, wenn es genügend Anregung der Reifenkraft gibt, um mehr als einen Parameter abzuschätzen.

3. Verfahren gemäß Anspruch 1, wobei der Schritt des Bewertens der Bedeutung von jedem der Parameter zumindest teilweise auf dem Wert des gegenwärtigen Reifenschlupfes basiert.

4. Verfahren gemäß Anspruch 3, weiterhin umfassend den Schritt der Bestimmung eines Schlupfbereiches für jeden Parameter, wobei der Schritt der Bewertung der Bedeutung von jedem der Parameter für jeden Parameter die Bestimmung umfasst, ob der gegenwärtige Reifenschlupf in den Schlupfbereich für den Parameter fällt.

**5.** Verfahren gemäß Anspruch 3, wobei der Schritt der Bestimmung, welcher oder welche der Parameter zu aktualisieren ist oder sind, zumindest teilweise auf dem besonderen Set aus Parametern in dem Modell beruht.

**6.** Verfahren gemäß Anspruch 3, wobei die Schritte des Bewertens der Bedeutung von jedem Parameter und der Bestimmung, welche oder welcher der Parameter zu aktualisieren ist oder sind, umfasst:

Abschätzung des Wertes von jedem der Parameter unter Verwendung der gegenwärtigen Reifenkraft und des gegenwärtigen Reifenschlupfes; und
Bestimmung, welche individuelle Parameterabschätzung oder Kombination von Parameterabschätzungen am zuverlässigsten ist.

**7.** Verfahren nach Anspruch 6, wobei die Bestimmung der Zuverlässigkeit von individuellen und kombinierten Parameterabschätzungen auf vorangehenden Abschätzungen der Parameter basiert.

**8.** Verfahren gemäß Anspruch 1, wobei der Schritt des Aktualisierens des Wertes von jedem Parameter, der bestimmt wurde, dass er aktualisiert werden sollte, umfasst:

Bestimmung, ob eine Ansteuerung der Reifenkraft angefordert werden sollte, um den Parameter zu aktualisieren; und
Ändern der Reifenkraft in Abhängigkeit von einer Bestimmung, dass eine Anregung des Systems veranlasst werden sollte.

**9.** Verfahren gemäß Anspruch 8, wobei der Schritt der Bestimmung, ob eine Anregung der Reifenkraft angefordert werden sollte, um die Parameter zu aktualisieren, auf der Detektion von einer Änderung in zumindest einem anderen Parameter basiert.

**10.** Verfahren gemäß Anspruch 8, wobei der Schritt der Änderung der Reifenkraft die Ausführung einer gesteuerten Variation von zumindest einem aus einer Bremskraft und einem Motordrehmoment umfasst.

**11.** Verfahren gemäß Anspruch 1, wobei der Schritt der Bestimmung der gegenwärtigen Reifenkraft und des gegenwärtigen Reifenschlupfes das Empfangen eines Signals (22, 24) enthält, das den Wert von zumindest einem Parameter repräsentiert, von dem zumindest eines von der gegenwärtigen Reifenkraft und dem gegenwärtigen Reifenschlupf berechnet wird.

**12.** Verfahren gemäß Anspruch 1, wobei einer der Parameter der Reibungskoeffizient ist.

**13.** Verfahren gemäß Anspruch 12, weiterhin umfassend die Verwendung der abgeschätzten Parameter zur Berechnung eines optimalen Schlupfes.

**14.** Verfahren gemäß Anspruch 1, wobei das Modell das Bürsten-Reifen-Modell ist.

**15.** Verfahren gemäß Anspruch 1, wobei der Schritt der Bewertung der Bedeutung von jedem der Parameter auf einem rekursiven Algorithmus basiert.

**16.** Verfahren gemäß Anspruch 15, wobei der rekursive Algorithmus die rekursive Methode der kleinsten Quadrate, Kalman-Filterung oder die MIT-Regel umfasst.

**17.** System zur Aktualisierung von abgeschätzten Parametern, die relevant für die Beziehung zwischen Reifenkraft und Reifenschlupf sind, zur Verwendung bei der Abschätzung der Reibung zwischen dem Reifen eines Fahrzeug (50) und einer Straße, umfassend:

eine Steuereinheit (20), funktionsfähig um eine Beziehung zwischen Reifenkraft und Reifenschlupf herzustellen unter Verwendung eines Modells, das auf einer Mehrzahl von abgeschätzten Parametern beruht, die abhängig von dem Reifen und/oder der Straße sind;
zumindest einen Eingang, mittels welchem die Steuereinheit (20) zumindest ein Signal (22, 24) empfängt, das eine gegenwärtige Reifenkraft und einen gegenwärtigen Reifenschlupf repräsentiert;
**dadurch gekennzeichnet, dass** die Steuereinheit (20) funktionsfähig ist, um die Bedeutung von jedem der Parameter bei der gegenwärtigen Reifenkraft und Schlupf zu bewerten, um zu bestimmen, welcher oder welche der Parameter zu aktualisieren ist oder sind basierend auf der bewerteten Bedeutung von jedem der Parameter, und um den Wert von jedem Parameter, von dem bestimmt wurde, dass er aktualisiert werden sollte, zu aktualisieren.

18. System gemäß Anspruch 17, wobei die Steuereinheit (20) mehr als einen der Parameter aktualisiert, wenn genügend Anregung der Reifenkraft vorhanden ist, um mehr als einen Parameter abzuschätzen.

19. System gemäß Anspruch 17, wobei die Steuereinheit (20) die Bedeutung von jedem der Parameter unter Verwendung des Wertes des gegenwärtigen Reifenschlupfes bewertet.

20. System gemäß Anspruch 19, wobei die Steuereinheit funktionsfähig ist, um für jeden Parameter einen Schlupfbereich zu bestimmen, wobei die Steuereinheit (20) die Bedeutung von jedem der Parameter bewertet mittels Bestimmung für jeden der Parameter, ob der gegenwärtige Reifenschlupf in den Schlupfbereich für den Parameter fällt.

21. System gemäß Anspruch 19, wobei die Steuereinheit (20) bestimmt, welcher oder welche der Parameter zu aktualisieren ist oder sind, zumindest teilweise basierend auf den anderen Parametern in dem Modell.

22. System gemäß Anspruch 19, wobei die Steuereinheit (20) den Wert von jedem der Parameter abschätzt unter Verwendung der gegenwärtigen Reifenkraft und Schlupf und bestimmt, welche individuelle Parameterabschätzung oder Kombination aus Parameterabschätzungen am zuverlässigsten ist.

23. System gemäß Anspruch 22, wobei die Bestimmung der Zuverlässigkeit von individuellen Parameterabschätzungen und Kombinationspara-meterabschätzungen auf vorangehenden Abschätzungen der Parameter basiert.

24. System gemäß Anspruch (17), wobei die Steuereinheit (20) funktionsfähig ist, um zu bestimmen, ob eine Anregung der Reifenkraft zur Aktualisierung eines Parameters angefordert werden sollte, weiter umfassend einen Ausgang zur Übertragung eines Anregungssignals, um die Reifenkraft zu ändern.

25. System gemäß Anspruch 24, wobei die Steuereinheit (20) bestimmt, ob eine Anregung der Reifenkraft angefordert werden sollte, um den Parameter zu aktualisieren, basierend auf der Detektion einer Änderung in zumindest einem anderen Parameter.

26. System gemäß Anspruch 24, wobei das Anregungssignal eine Variation von zumindest einem aus einer Bremskraft und einem Motordrehmoment steuert.

27. System gemäß Anspruch 17, weiterhin umfassend zumindest einen Sensor, der zumindest einen Parameter misst, von welchem zumindest eines aus gegenwärtiger Reifenkraft und Reifenschlupf berechnet wird, und der das Signal an die Steuereinheit (20) überträgt.

28. System gemäß Anspruch 17, wobei der zumindest eine Sensor zumindest einen Sensor umfasst, der direkt den Reifenschlupf misst.

29. System gemäß Anspruch 17, wobei einer der Parameter der Reibungskoeffizient ist.

30. System gemäß Anspruch 29, wobei die Steuereinheit (20) funktionsfähig ist, um die Parameter zur Berechnung eines optimalen Schlupfes zu verwenden.

31. System gemäß Anspruch 17, wobei das Modell das Reifen-Bürstenmodell ist.

32. System gemäß Anspruch 17, wobei die Steuerung einen rekursiven Algorithmus zur Bewertung der Parameter beinhaltet.

33. System gemäß Anspruch 32, wobei der rekursive Algorithmus die rekursive Methode der kleinsten Quadrate, Kalman-Filterung oder die MIT-Regel umfasst.

**Revendications**

1. Procédé d'actualisation de paramètres estimés se rapportant à la relation entre la force de pneu et le patinage de pneu destiné à l'utilisation dans l'estimation de la friction entre le pneu d'un véhicule (50) et une route, le procédé comprenant les étapes suivantes :

   - prévoir une unité de commande (20) ;
   - utiliser un modèle, en conjonction avec l'unité de commande (20), basé sur une pluralité de paramètres estimés qui dépendent de l'un ou des deux du pneu et de la route pour établir une relation entre la force du pneu et le patinage du pneu ;
   - déterminer, avec l'unité de commande (20), une force de pneu effective et un patinage de pneu effectif ;

   ledit procédé étant **caractérisé par** les étapes suivantes :

   - évaluer, avec l'unité de commande (20), l'importance de chacun des paramètres aux niveaux effectifs de force et de patinage du pneu ;
   - déterminer, avec l'unité de commande (20), les paramètres qui doivent être actualisés sur la base de l'importance évaluée de chacun de ces paramètres ; et
   - actualiser la valeur de chaque paramètre dont il a été déterminé qu'il devait être actualisé.

2. Procédé selon la revendication 1, dans lequel l'étape d'actualisation comprend l'actualisation de plus d'un des paramètres lorsqu'il existe une excitation suffisante de la force du pneu pour estimer plus d'un paramètre.

3. Procédé selon la revendication 1, dans lequel l'étape d'évaluation de l'importance de chacun des paramètres se base au moins partiellement sur la valeur du patinage du pneu effectif.

4. Procédé selon la revendication 3, comprenant en outre l'étape consistant à déterminer une marge de patinage pour chaque paramètre, dans lequel l'étape d'évaluation de l'importance de chacun des paramètres comprend le fait de déterminer, pour chaque paramètre, si le patinage du pneu effectif entre dans la marge de patinage pour ce paramètre.

5. Procédé selon la revendication 3, dans lequel l'étape de détermination des paramètres qui doivent être actualisés se base au moins partiellement sur l'ensemble spécifique de paramètres du modèle.

6. Procédé selon la revendication 3, dans lequel les étapes d'évaluation de l'importance de chacun des paramètres et de détermination des paramètres qui doivent être actualisés comprennent les opérations suivantes :

   - estimer la valeur de chacun des paramètres en utilisant la force de pneu effective et le patinage de pneu effectif ; et
   - déterminer quelle estimation de paramètres individuelle ou quelle combinaison d'estimations de paramètres est la plus fiable.

7. Procédé selon la revendication 6, dans lequel la détermination de la fiabilité des estimations de paramètres individuelles et combinées est basée sur des estimations antérieures des paramètres.

8. Procédé selon la revendication 1, dans lequel l'étape d'actualisation de la valeur de chaque paramètre dont il a été déterminé qu'il devait être actualisé comprend les opérations suivantes :

   - déterminer si une excitation de la force du pneu doit être demandée pour actualiser le paramètre ; et
   - modifier la force du pneu s'il a été déterminé qu'une excitation du système devait être induite.

9. Procédé selon la revendication 8, dans lequel l'étape consistant à déterminer si une excitation de la force du pneu doit être demandée pour actualiser les paramètres est basée sur la détection d'un changement dans au moins un autre paramètre.

10. Procédé selon la revendication 8, dans lequel l'étape consistant à modifier la force du pneu comprend la réalisation d'une variation contrôlée d'au moins un paramètre parmi la force de freinage et le couple du moteur.

**11.** Procédé selon la revendication 1, dans lequel l'étape de détermination de la force de pneu effective et du patinage de pneu effectif inclut la réception d'un signal (22, 24) représentant la valeur d'au moins un paramètre à partir duquel au moins une valeur parmi la force de pneu effective et le patinage de pneu effectif est calculée.

**12.** Procédé selon la revendication 1, dans lequel l'un des paramètres est le coefficient de friction.

**13.** Procédé selon la revendication 12, comprenant en outre l'utilisation des paramètres estimés pour calculer un patinage optimal.

**14.** Procédé selon la revendication 1, dans lequel le modèle est le modèle de pneu de balai.

**15.** Procédé selon la revendication 1, dans lequel l'étape d'évaluation de l'importance de chacun des paramètres est basée sur un algorithme récursif.

**16.** Procédé selon la revendication 15, dans lequel l'algorithme récursif comprend des moindres carrés récursifs, un filtrage Kalman ou la règle MIT.

**17.** Système d'actualisation de paramètres estimés se rapportant à la relation entre la force de pneu et le patinage de pneu destiné à l'utilisation dans l'estimation de la friction entre le pneu d'un véhicule (50) et une route, comprenant :

- une unité de commande (20) opérant pour établir une relation entre la force de pneu et le patinage de pneu en utilisant un modèle basé sur une pluralité de paramètres estimés qui dépendent d'un ou des deux du pneu ets de la route ; et
- au moins une entrée par laquelle ladite unité de commande (20) reçoit au moins un signal (22, 24) représentant une force de pneu effective et un patinage de pneu effectif ;

**caractérisé en ce que** ladite unité de commande (20) opère pour évaluer l'importance de chacun des paramètres aux niveaux effectifs de force et de patinage du pneu, pour déterminer les paramètres qui doivent être actualisés sur la base de l'importance évaluée de chacun de ces paramètres et pour actualiser la valeur de chaque paramètre dont il a été déterminé qu'il devait être actualisé.

**18.** Système selon la revendication 17, dans lequel ladite unité de commande (20) actualise plus d'un des paramètres lorsqu'il existe une excitation suffisante de la force du pneu pour estimer plus d'un paramètre.

**19.** Système selon la revendication 17, dans lequel ladite unité de commande (20) évalue l'importance de chacun des paramètres en utilisant la valeur du patinage du pneu effectif.

**20.** Système selon la revendication 19, dans lequel ladite unité de commande (20) opère pour déterminer une marge de patinage pour chaque paramètre, dans lequel l'unité de commande (20) évalue l'importance de chacun des paramètres en déterminant, pour chacun des paramètres, si le patinage du pneu effectif entre dans la marge de patinage pour ce paramètre.

**21.** Système selon la revendication 19, dans lequel ladite unité de commande (20) détermine les paramètres qui doivent être actualisés au moins partiellement sur la base des autres paramètres dudit modèle.

**22.** Système selon la revendication 19, dans lequel ladite unité de commande (20) estime la valeur de chacun des paramètres en utilisant la force de pneu effective et le patinage de pneu effectif et détermine quelle estimation de paramètres individuelle ou quelle combinaison d'estimations de paramètres est la plus fiable.

**23.** Système selon la revendication 22, dans lequel la détermination de la fiabilité des estimations de paramètres individuelles et combinées est basée sur des estimations antérieures des paramètres.

**24.** Système selon la revendication 17, dans lequel ladite unité de commande (20) opère pour déterminer si une excitation de la force du pneu doit être demandée pour actualiser un paramètre, comprenant en outre une sortie pour communiquer un signal d'excitation afin de modifier la force du pneu.

**25.** Système selon la revendication 24, dans lequel l'unité de commande (20) détermine si une excitation de la force du pneu doit être demandée pour actualiser le paramètre sur la base de la détection d'un changement dans au moins un autre paramètre.

26. Système selon la revendication 24, dans lequel le signal d'excitation commande une variation d'au moins un paramètre parmi la force de freinage et le couple du moteur.

27. Système selon la revendication 17, comprenant en outre au moins un capteur qui mesure au moins un paramètre à partir duquel au moins une valeur parmi la force de pneu effective et le patinage de pneu effectif est calculée et communique ledit signal à ladite unité de commande (20).

28. Système selon la revendication 17, dans lequel ledit au moins un capteur comprend un capteur qui mesure directement le patinage du pneu.

29. Système selon la revendication 17, dans lequel l'un desdits paramètres est le coefficient de friction.

30. Système selon la revendication 29, dans lequel ladite unité de commande (20) opère pour utiliser les paramètres afin de calculer un patinage optimal.

31. Système selon la revendication 17, dans lequel ledit modèle est le modèle de pneu de balai.

32. Système selon la revendication 17, dans lequel ladite commande comprend un algorithme récursif pour évaluer les paramètres.

33. Système selon la revendication 32, dans lequel ledit algorithme récursif comprend des moindres carrés récursifs, un filtrage Kalman ou la règle MIT.

**Fig. 1**

**Fig. 2**

EP 1 719 676 B1

EP 1 719 676 B1

$$\begin{pmatrix} \omega_{x,Front,Right} \\ \omega'_{x,Front,Right} \end{pmatrix}$$

**Fig. 3**

$$\begin{pmatrix} v_{x,Rear_1,Right} \\ F_{x,Rear_1,Right} \end{pmatrix}$$

$$\begin{pmatrix} \omega_{x,Rear_1,Right} \\ \omega'_{x,Rear_1,Right} \end{pmatrix}$$

$$\begin{pmatrix} v_{x,Rear_2,Right} \\ F_{x,Rear_2,Right} \end{pmatrix}$$

$$\begin{pmatrix} \omega_{x,Rear_2,Right} \\ \omega'_{x,Rear_2,Right} \end{pmatrix}$$

**40**

$\delta$

$$\begin{pmatrix} v_{y,Front,Right} \\ F_{y,Front,Right} \end{pmatrix}$$

$$\begin{pmatrix} v_{y,Rear_1,Right} \\ F_{y,Rear_1,Right} \end{pmatrix}$$

$$\begin{pmatrix} v_{y,Rear_2,Right} \\ F_{y,Rear_2,Right} \end{pmatrix}$$

$$\begin{pmatrix} v_{x,Front,Right} \\ F_{x,Front,Right} \end{pmatrix}$$

*rot, rot'*

$v_x, a_x$

**50**

**42**

$v, a$     $v_y, a_y$

$$\begin{pmatrix} \omega_{x,Front,Left} \\ \omega'_{x,Front,Left} \end{pmatrix}$$

$$\begin{pmatrix} \omega_{x,Rear_1,Left} \\ \omega'_{x,Rear_1,Left} \end{pmatrix}$$

$$\begin{pmatrix} \omega_{x,Rear_2,Left} \\ \omega'_{x,Rear_2,Left} \end{pmatrix}$$

$\delta$

$$\begin{pmatrix} v_{y,Front,Left} \\ F_{y,Front,Left} \end{pmatrix}$$

$$\begin{pmatrix} v_{x,Rear_1,Left} \\ F_{x,Rear_1,Left} \end{pmatrix}$$

$$\begin{pmatrix} v_{y,Rear_1,Left} \\ F_{y,Rear_1,Left} \end{pmatrix}$$

$$\begin{pmatrix} v_{x,Rear_2,Left} \\ F_{x,Rear_2,Left} \end{pmatrix}$$

$$\begin{pmatrix} v_{y,Rear_2,Left} \\ F_{y,Rear_2,Left} \end{pmatrix}$$

$$\begin{pmatrix} v_{x,Front,Left} \\ F_{x,Front,Left} \end{pmatrix}$$

## Fig. 4

Tire model and data points

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 67870805 P
- US 6549842 B1
- US 2002059824 A1
- EP 0891904 A2
- US 5513907 A
- US 20050168066 A
- US 20050161295 A
- US 20050067233 A

### Non-patent literature cited in the description

- **JACOB SVENDENIUS.** Tire Models For Use In Braking Applications. Lund Institute of Technology